# EUROPEAN PATENT APPLICATION

(11) **EP 4 593 121 A1**
(43) Date of publication of application: **30.07.2025**
(21) Application number: 24870114.6
(22) Date of filing: 07.08.2024
(51) Int. Cl.: H01M 4/62, H01M 4/13, H01M 10/0525, H01M 10/058

(54) **SEMI-SOLID-STATE LITHIUM BATTERY AND TERMINAL COMPRISING SAME**

(30) Priority: 27.09.2023 CN 202311262558
(71) Applicant: Honor Device Co., Ltd., Shenzhen, Guangdong 518040 (CN)
(72) Inventor: LI, Wenwen, Shenzhen, Guangdong 518040 (CN); WU, Xia, Shenzhen, Guangdong 518040 (CN); CUI, Houlei, Shenzhen, Guangdong 518040 (CN)
(74) Representative: Thun, Clemens
(86) International application number: PCT/CN2024/110298
(87) International publication number: WO 2025/066565

(57) **Abstract**

This application provides a semi-solid state lithium battery, including: an electrolyte solution; a separator disposed in the electrolyte solution; and a positive electrode plate and a negative electrode plate that are respectively disposed on two sides of the separator, where the positive electrode plate includes a positive current collector and a positive active layer disposed on the positive current collector, the positive active layer is doped with 0.1 wt%~5 wt% of oxide electrolyte, and D50 of the oxide electrolyte is 0.05 µm~1.2 µm; and the negative electrode plate includes a negative current collector and a negative active layer disposed on the negative current collector. In this application, the positive active layer is doped with the oxide electrolyte, to reduce a lowest electrolyte solution retention coefficient of the battery and reduce an expansion rate of the battery after high-temperature cycle 1000cls, and improve performance such as a capacity retention rate of the battery after high-temperature cycle 1000cls, a capacity retention rate of the battery at -20°C, a quantity of pulse discharge times of the battery at -20°C, a rate discharge capacity of the battery at 2 C/0.2 C, and a temperature of a thermal shock test chamber for the battery.

## Description

This application claims priority to Chinese Patent Application No. 202311262558.2, filed with the China National Intellectual Property Administration on September 27, 2023 and entitled "SEMI-SOLID STATE LITHIUM BATTERY AND TERMINAL INCLUDING SEMI-SOLID STATE LITHIUM BATTERY", which is incorporated herein by reference in its entirety.

### TECHNICAL FIELD

This application relates to the field of battery technologies, and in particular, to a semi-solid state lithium battery and a terminal including the semi-solid state lithium battery.

### BACKGROUND

Impedance of a lithium-ion battery includes ohmic internal resistance, SEI film interface impedance, charge transfer impedance, ion diffusion internal resistance, and the like. With an increase in energy density of the battery, interface impedance of the battery gradually increases, and low-temperature performance, high-temperature performance, and the like of the battery also degrade, resulting in shortening of a battery life of a mobile electronic device.

### SUMMARY

This application provides a semi-solid state lithium battery and a terminal including the semi-solid state lithium battery. The semi-solid state lithium battery provided in this application has good high-temperature performance, low-temperature performance, and a large rate discharge capacity, and can prolong a battery life of a terminal such as a mobile electronic device at a high temperature or a low temperature.

This application provides a semi-solid state lithium battery, including:
an electrolyte solution;
a separator disposed in the electrolyte solution; and
a positive electrode plate and a negative electrode plate that are respectively disposed on two sides of the separator.

The positive electrode plate includes a positive current collector and a positive active layer disposed on the positive current collector, the positive active layer is doped with 0.1 wt%~5 wt% of oxide electrolyte, and D50 of the oxide electrolyte is 0.05 µm~ 1.2 µm.

The negative electrode plate includes a negative current collector and a negative active layer disposed on the negative current collector.

In this application, the oxide electrolyte whose D50 is 0.05 µm~1.2 µm is added to a positive material in a doping amount of 0.1 wt%~5 wt% to form the positive active layer, so that a lowest electrolyte solution retention coefficient of the battery can be reduced from 1.55 g/Ah to less than 1.41 g/Ah, an expansion rate of the battery after high-temperature cycle 1000cls is reduced from 15% to less than 13.1%, a capacity retention rate of the battery after high-temperature cycle 1000cls is increased from 58% to more than 70%, a capacity retention rate of the battery at -20°C is increased from about 50% to more than 55%, a quantity of pulse discharge times of the battery at -20°C is significantly increased from 20 to more than 50, a rate discharge capacity of the battery at 2 C/0.2 C is slightly increased, and a temperature of a thermal shock test chamber for the battery is increased from 126°C to more than 130°C. An experimental result shows that an excessively small or large oxide electrolyte particle size has no obvious improvement effect on the foregoing performance, and even may make the foregoing performance worse, especially the quantity of pulse discharge times at a low temperature.

Further, in this application, an oxide electrolyte whose D50 is 0.05 µm~1.2 µm is added to a negative material in a doping amount of 0.1 wt%~5 wt% to form the negative active layer, that is, both the positive active layer and the negative active layer are doped with the oxide electrolytes, so that the lowest electrolyte solution retention coefficient of the battery can be further reduced to less than 1.35 g/Ah, the expansion rate of the battery after high-temperature cycle 1000cls is reduced to less than 12.2%, the capacity retention rate of the battery after high-temperature cycle 1000cls is increased to more than 70%, the capacity retention rate of the battery at -20°C is increased to more than 60%, the quantity of pulse discharge times of the battery at - 20°C is increased to more than 60, the rate discharge capacity of the battery at 2 C/0.2 C is increased to more than 94%, and the temperature of the thermal shock test chamber for the battery is increased to more than 132°C. However, the excessively small or large oxide electrolyte particle size has no obvious effect on further improvement of the foregoing performance, but affects performance improvement brought by doping the positive active layer with the oxide electrolyte.

Further, in this application, a coating including an oxide electrolyte is disposed on at least one side, preferably two sides, of the separator, so that the lowest electrolyte solution retention coefficient of the battery can be further reduced to less than 1.30 g/Ah, the expansion rate of the battery after high-temperature cycle 1000cls is reduced to less than 11.5%, the capacity retention rate of the battery after high-temperature cycle 1000cls is increased to more than 77%, the capacity retention rate of the battery at -20°C is increased to more than 65%, the quantity of pulse discharge times of the battery at -20°C is increased to more than 90, the rate discharge capacity of the battery at 2 C/0.2 C is increased to more than 95%, and the temperature of the thermal shock test chamber for the battery is increased to more than 134°C.

Furthermore, in this application, a coating including an oxide electrolyte is disposed between the positive current collector and the positive active layer and/or between the negative current collector and the negative active layer, to further improve safety of the battery, in particular, safety during puncture and extrusion.

In this application, the oxidized electrolytes with D50 of 0.05 µm~1.2 µm are introduced into the positive active layer and the negative active layer, and the coatings containing the oxidized electrolytes are further formed on the separator and the current collectors, to reduce ion transport impedance at an electrode/electrolyte solution interface, so that positive and negative electrodes have interfaces with faster ion transport, and stability at the electrode/electrolyte solution interface is improved, thereby significantly improving low-temperature performance, rate discharge performance, high-temperature performance, and safety of the battery. The lithium-ion battery provided in this application may be used in consumer products, for example, terminals, including devices such as a mobile phone, a watch, and a pad, and may also be used in power products, for example, automobiles, to significantly improve use performance of the products at low and high temperatures, and prolong a service life of the battery.

It should be understood that descriptions of technical features, technical solutions, beneficial effects, or similar expressions in this application do not imply that all features and advantages can be achieved in any single embodiment. On the contrary, it can be understood that descriptions of features or beneficial effects mean that specific technical features, technical solutions, or beneficial effects are included in at least one embodiment. Therefore, the descriptions of the technical features, the technical solutions, or the beneficial effects in the specification do not necessarily mean a same embodiment. Further, the technical features, the technical solutions, and the beneficial effects described in the embodiments may be combined in any appropriate manner. A person skilled in the art should understand that an embodiment may be implemented without one or more specific technical features, technical solutions, or beneficial effects in a specific embodiment. In other embodiments, additional technical features and beneficial effects may also be identified in specific embodiments that do not reflect all embodiments.

### BRIEF DESCRIPTION OF DRAWINGS

To describe technical solutions in embodiments of this application more clearly, the following briefly describes accompanying drawings that need to be used in embodiments of this application.
FIG. 1 is a schematic diagram of a structure of a semi-solid state lithium battery according to a first embodiment of this application;
FIG. 2 is a schematic diagram of a structure of a semi-solid state lithium battery according to a second embodiment of this application;
FIG. 3 is a schematic diagram of a structure of a semi-solid state lithium battery according to a third embodiment of this application;
FIG. 4 shows capacity retention rates of batteries provided in Comparative Example 1 and Embodiment 5 at -20°C; and
FIG. 5 shows SOC-RSS curves of batteries provided in Comparative Example 1 and Embodiment 5.

### DESCRIPTION OF EMBODIMENTS

In the embodiments of this application, words such as "example" or "for example" are used to indicate an example, illustration, or description. Any embodiment or design solution described as "example" or "for example" in the embodiments of this application should not be construed as being more preferred or advantageous than other embodiments or design solutions. Exactly, use of the words such as "example" or "for example" is intended to present a related concept in a specific manner.

Unless otherwise defined, a technical term or a scientific term used in this application should have a general meaning understood by a person of ordinary skill in the art of this application. "First", "second", and a similar word used in this application do not indicate any order, quantity, or significance, but are used to only distinguish between different components. Similarly, "one", "a/an", "the", or a similar word also does not indicate a quantity limitation, but indicates that at least one ... exists. "Including", "comprising", or a similar word means that an element or article appearing before the word covers elements or articles listed after the word and equivalents thereof, and does not exclude other elements or articles. "Connection", "connected to", or a similar word is not limited to a physical or mechanical connection, but may include an electrical connection, regardless of a direct connection or an indirect connection. "Upper", "lower", "left", "right", and the like are only intended to indicate relative positional relationships. When an absolute position of a described object changes, the relative position relationship may also change accordingly.

This application provides a semi-solid state lithium battery, including:
an electrolyte solution;
a separator disposed in the electrolyte solution; and
a positive electrode plate and a negative electrode plate that are respectively disposed on two sides of the separator.

The positive electrode plate includes a positive current collector and a positive active layer disposed on the positive current collector, the positive active layer is doped with 0.1 wt%~5 wt% of oxide electrolyte, and D50 of the oxide electrolyte is 0.05 µm~ 1.2 µm.

The negative electrode plate includes a negative current collector and a negative active layer disposed on the negative current collector.

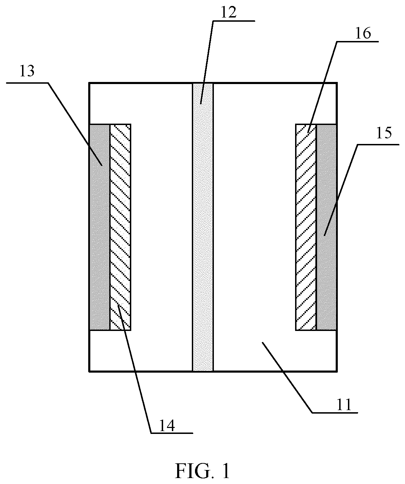

Refer to FIG. 1. FIG. 1 is a schematic diagram of a structure of a semi-solid state lithium battery according to a first embodiment of this application. 11 is an electrolyte solution, 12 is a separator, 13 is a positive current collector, 14 is a positive active layer, 15 is a negative current collector, and 16 is a negative active layer.

The semi-solid state lithium battery provided in this application includes an electrolyte solution 11. The electrolyte solution is a non-aqueous solvent electrolyte solution, and includes a non-aqueous solvent, lithium salt, and an optional additive. The non-aqueous solvent includes cyclic carbonate and chain carbonate. In some specific implementations, the cyclic carbonate includes but is not limited to one or more of ethylene carbonate (EC) or propylene carbonate (PC), and the chain carbonate includes but is not limited to one or more of dimethyl carbonate (DMC), diethyl carbonate (DEC), and ethyl methyl carbonate (EMC). In some possible implementations, the non-aqueous solvent includes ethylene carbonate, propylene carbonate, and diethyl carbonate, and a mass ratio of ethylene carbonate to propylene carbonate to diethyl carbonate is preferably 1~5:1~5:1~5, more preferably 3:3:4. The lithium salt is electrolyte, and includes but is not limited to one or more of lithium hexafluorophosphate, lithium oxalyldifluoroborate, lithium difluorophosphate (LiPO₂F₂), and lithium bis(fluorosulfonyl)imide (LiFSI), preferably, is lithium hexafluorophosphate. A concentration of the lithium salt in the electrolyte solution is preferably 10 wt%~20 wt%, and more preferably 12.5 wt%~16 wt%. A type and a dosage of the additive are not specifically limited in this application, and the additive may be selected according to a battery function. Details are not described in this application again.

The semi-solid state lithium battery provided in this application includes a separator 12 disposed in the electrolyte solution 11, and the separator 12 is configured to isolate a positive electrode plate from a negative electrode plate. A material and a thickness of the separator are not specifically limited in this application. A separator commonly used in the art is acceptable, for example, a PE separator with a thickness of 9 µm.

In the semi-solid state battery provided in this application, the positive electrode plate is disposed on one side of the separator 12, and the negative electrode plate is disposed on the other side of the separator 12. The positive electrode plate includes a positive current collector 13 and a positive active layer 14 disposed on the positive current collector. The positive current collector 13 is not specifically limited in this application. A positive current collector well known to a person skilled in the art is acceptable, for example, aluminum foil with a thickness of 8 µm.

In this application, the positive active layer is doped with 0.1 wt%~5 wt% of oxide electrolyte with D50 of 0.05 µm~1.2 µm, so that a lowest electrolyte solution retention coefficient of the battery can be reduced, an expansion rate of the battery after high-temperature cycle 1000cls is reduced, a capacity retention rate of the battery after high-temperature cycle 1000cls is increased, a capacity retention rate of the battery at -20°C is increased, a quantity of pulse discharge times of the battery at -20°C is increased, a rate discharge capacity of the battery at 2 C/0.2 C is increased, and a temperature of a thermal shock test chamber for the battery is increased. An experimental result shows that an excessively small or large oxide electrolyte particle size, for example, less than 10 nm or greater than 1.5 µm, has no obvious improvement effect on the foregoing performance, and even may make the foregoing performance worse, especially the quantity of pulse discharge times at a low temperature. In some specific implementations, the positive active layer includes a positive active material, a conductive agent, a binder, and an oxide electrolyte. The positive active material includes but is not limited to one or more of a ternary positive material, lithium cobalt oxide, manganese-rich lithium, nickel-manganese spinel, lithium iron phosphate, lithium iron manganese phosphate, and lithium manganate. A chemical formula of the ternary positive material may be LiNiₓCo_{y}Mn_{1-x-y}O2, 0.7<x<1, and 0<y<0.3. The conductive agent includes but is not limited to one or more of conductive carbon black, acetylene black, Ketjen black, conductive graphite, conductive carbon fiber, carbon nanotube, metal powder, and carbon fiber. The binder includes but is not limited to one or more of polymerized styrene butadiene rubber (Polymerized Styrene Butadiene Rubber, SBR), carboxymethyl cellulose (Carboxymethyl Cellulose, CMC), poly(vinylidene fluoride) (Poly(vinylidene fluoride), PVDF), polymethyl methacrylate (Polymethyl Methacrylate, PMMA), polyacrylonitrile (Polyacrylonitrile, PAN), and polyethylene oxide (Polyethylene Oxide, PEO). In some specific implementations, a mass ratio of the positive active material to the conductive agent to the binder is 70~99:0.5~15:0.5~15, preferably 75~99:1~10:1~10, and more preferably 80~99:1~5:1~5.

In some specific implementations, the positive active layer is doped with 0.1 wt%~5 wt% of oxide electrolyte, that is, the oxide electrolyte accounts for 0.1 wt%~5 wt%, preferably 0.2 wt%~4 wt%, and more preferably 0.5 wt%~3 wt%, of a total amount of the positive active material, the conductive agent, and the binder. D50 of the oxide electrolyte is 0.05 µm~ 1.2 µm, preferably 0.08 µm~1 µm, and more preferably 0.1 µm~1 µm. The oxide electrolyte may be selected from one or more of a NASICON structural material, a perovskite structural material, an anti-perovskite structural material, a LISICON structure, and a garnet structural material, including but not limited to Li_{1.4}Al_{0.4}Ti_{1.6}(PO4)₃, Li_{1.5}Al_{0.5}Ge_{1.5}(PO4)₃, Li₇La₃Zr₂O₁₂, Li_{6.4}La₃Zr₂Ta_{0.6}O₁₂, and La_{0.56}Li_{0.33}TiO₃, and preferably, is Li_{1.4}Al_{0.4}Ti_{1.6}(PO4)₃ or Li₇La₃Zr₂O₁₂.

In some specific implementations, the negative electrode plate includes a negative current collector 15 and a negative active layer 16 disposed on the negative current collector 15. The negative current collector 15 is not specifically limited in this application. A negative current collector well known to a person skilled in the art is acceptable, for example, copper foil with a thickness of 8 µm.

In some specific implementations, the negative active layer includes a negative active material, a conductive agent, and a binder. The negative active material includes but is not limited to one or more of a carbon material, a silica-based material, lithium metal, or lithium alloy, preferably, is one or two of graphite or the silica-based material. The conductive agent includes but is not limited to one or more of conductive carbon black, acetylene black, Ketjen black, conductive graphite, conductive carbon fiber, carbon nanotube, metal powder, and carbon fiber. The binder includes but is not limited to one or more of polymerized styrene butadiene rubber (Polymerized Styrene Butadiene Rubber, SBR), carboxymethyl cellulose (Carboxymethyl Cellulose, CMC), poly(vinylidene fluoride) (Poly(vinylidene fluoride), PVDF), polymethyl methacrylate (Polymethyl Methacrylate, PMMA), polyacrylonitrile (Polyacrylonitrile, PAN), and polyethylene oxide (Polyethylene Oxide, PEO). In some specific implementations, a mass ratio of the negative active material to the conductive agent to the binder is 70~99:0.5~15:0.5~15, preferably 75~99:1~10:1~10, and more preferably 80~99:1~5:1~5.

In some specific implementations, in this application, the negative active layer is doped with 0.1 wt%~5 wt% of oxide electrolyte with D50 of 0.05 µm~1.2 µm, so that the lowest electrolyte solution retention coefficient of the battery is further reduced, the expansion rate of the battery after high-temperature cycle 1000cls is reduced, the capacity retention rate of the battery after high-temperature cycle 1000cls is increased, the capacity retention rate of the battery at -20°C is increased, the quantity of pulse discharge times of the battery at -20°C is increased, the rate discharge capacity of the battery at 2 C/0.2 C is increased, and the temperature of the thermal shock test chamber for the battery is increased. The experimental result shows that the excessively small or large oxide electrolyte particle size, for example, less than 10 nm or greater than 1.5 µm, has no obvious improvement effect on the foregoing performance, and even may make the foregoing performance worse, especially the quantity of pulse discharge times at a low temperature.

In some specific implementations, the negative active layer is doped with 0.1 wt%~5 wt% of oxide electrolyte, that is, the oxide electrolyte accounts for 0.1 wt%~5 wt%, preferably 0.2 wt%~4 wt%, and more preferably 0.5 wt%~3 wt%, of a total amount of the negative active material, the conductive agent, and the binder. D50 of the oxide electrolyte is 0.05 µm~ 1.2 µm, preferably 0.08 µm~1 µm, and more preferably 0.1 µm~1 µm. The oxide electrolyte may be selected from one or more of a NASICON structural material, a perovskite structural material, an anti-perovskite structural material, a LISICON structure, and a garnet structural material, including but not limited to Li_{1.4}Al_{0.4}Ti_{1.6}(PO4)₃, Li_{1.5}Al_{0.5}Ge_{1.5}(PO4)₃, Li₇La₃Zr₂O₁₂, Li_{6.4}La₃Zr₂Ta_{0.6}O₁₂, and La_{0.56}Li_{0.33}TiO₃, and preferably, is Li_{1.4}Al_{0.4}Ti_{1.6}(PO4)₃ or Li₇La₃Zr₂O₁₂.

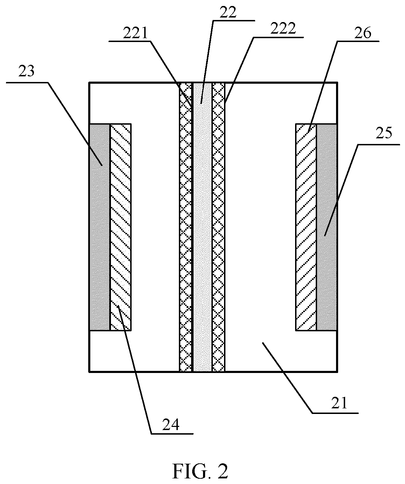

In some specific implementations, a coating including an oxide electrolyte is disposed on at least one side of the separator. Refer to FIG. 2. FIG. 2 is a schematic diagram of a structure of a semi-solid state lithium battery according to a second embodiment of this application. 21 is an electrolyte solution, 22 is a separator, 23 is a positive current collector, 24 is a positive active layer, 25 is a negative current collector, 26 is a negative active layer, 221 is a first coating, and 222 is a second coating.

In this application, a coating including a solid oxide is disposed on at least one side of the separator, so that the lowest electrolyte solution retention coefficient of the battery can be further reduced to less than 1.30 g/Ah, the expansion rate of the battery after high-temperature cycle 1000cls is reduced to less than 11.5%, the capacity retention rate of the battery after high-temperature cycle 1000cls is increased to more than 77%, the capacity retention rate of the battery at -20°C is increased to more than 65%, the quantity of pulse discharge times of the battery at - 20°C is increased to more than 90, the rate discharge capacity of the battery at 2 C/0.2 C is increased to more than 95%, and the temperature of the thermal shock test chamber for the battery is increased to more than 134°C.

In the semi-solid state lithium battery provided in the second embodiment, for the electrolyte solution 21, the separator 22, the positive current collector 23, the positive active layer 24, the negative current collector 25, and the negative active layer 26, refer to the descriptions above. Details are not described in this application again.

In some specific implementations, the first coating 221 includes an oxide electrolyte and a binder. A mass ratio of the solid oxide electrolyte to the binder is preferably 0.05~0.5:5~15, and more preferably 0.1~0.2:8~12. A thickness of the first coating 221 is preferably 0.5 µm-5 µm, and more preferably 1 µm-2 µm. The oxide electrolyte and the binder are described above. Details are not described in this application again. Similarly, the second coating 222 may be similar to, the same as, or different from the first coating 221. Details are not described in this application again.

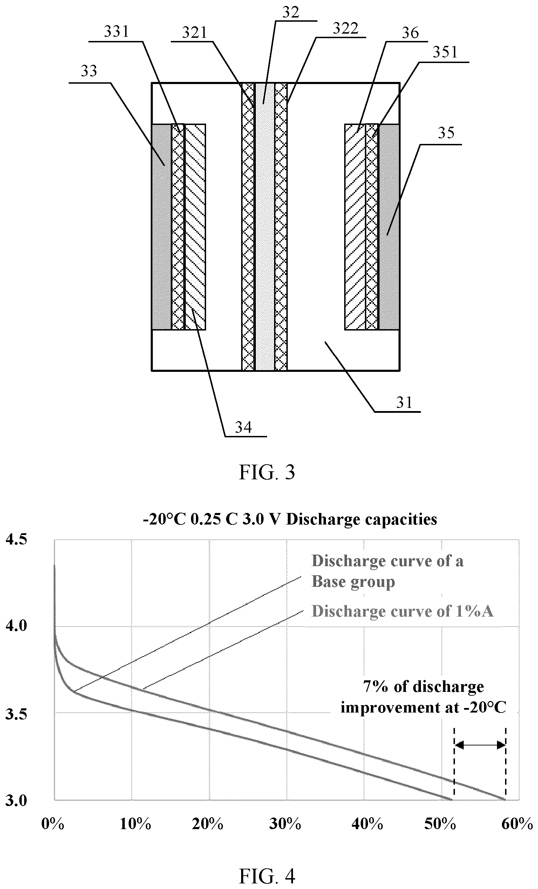

Furthermore, in this application, a coating including an oxide electrolyte is disposed between the positive current collector and the positive active layer and/or between the negative current collector and the negative active layer, to further improve safety of the battery, in particular, safety during puncture and extrusion. Refer to FIG. 3. FIG. 3 is a schematic diagram of a structure of a semi-solid state lithium battery according to a third embodiment of this application. 31 is an electrolyte solution, 32 is a separator, 33 is a positive current collector, 34 is a positive active layer, 35 is a negative current collector, 36 is a negative active layer, 321 is a first coating, 322 is a second coating, 331 is a third coating, and 351 is a fourth coating.

In the semi-solid state lithium battery provided in the third embodiment, for the electrolyte solution 31, the separator 32, the positive current collector 33, the positive active layer 34, the negative current collector 35, the negative active layer 36, the first coating 321, and the second coating 322, refer to the descriptions above. Details are not described in this application again.

In some specific implementations, the third coating 331 includes an oxide electrolyte and a binder. A mass ratio of the solid oxide electrolyte to the binder is preferably 0.05~0.5:5~15, and more preferably 0.1~0.2:8~12. A thickness of the third coating 331 is preferably 0.5 µm-5 µm, and more preferably 1 µm-2 µm. The oxide electrolyte and the binder are described above. Details are not described in this application again. Similarly, the fourth coating 351 may be similar to, the same as, or different from the third coating 331. Details are not described in this application again.

In some specific implementations, in the present invention, a fifth coating including an oxide electrolyte is disposed on one side that is of the positive current collector and that is away from the positive active layer, and/or a sixth coating including an oxide electrolyte is disposed on one side that is of the negative current collector and that is away from the negative active layer. The fifth coating and the sixth coating are similar to the first coating. Details are not described in this application again.

In some specific implementations, the positive active layer is doped with 0.15 wt%~3.5 wt% of oxide electrolyte, D50 of the oxide electrolyte is 0.05 µm~1 µm, and the oxide electrolyte is selected from Li_{1.4}Al_{0.4}Ti_{1.6}(PO4)₃ or Li₇La₃Zr₂O₁₂.

In some specific implementations, the negative active layer is doped with 0.15 wt%~3.5 wt% of oxide electrolyte, D50 of the oxide electrolyte is 0.05 µm~1 µm, and the oxide electrolyte is selected from Li_{1.4}Al_{0.4}Ti_{1.6}(PO₄)₃.

In some specific implementations, D50 of the oxide electrolytes in the first coating and the second coating is independently 0.05 µm~1.2 µm, and the oxide electrolytes are independently selected from Li_{1.4}Al_{0.4}Ti_{1.6}(PO₄)₃ or Li₇La₃Zr₂O₁₂.

In some specific implementations, D50 of the oxide electrolytes in the third coating and the fourth coating is independently 0.05 µm~1.2 µm, and the oxide electrolytes are independently selected from Li_{1.4}Al_{0.4}Ti_{1.6}(PO₄)₃ or Li₇La₃Zr₂O₁₂.

In some specific implementations, D50 of the oxide electrolytes in the fifth coating and the sixth coating is independently 0.05 µm~1.2 µm, and the oxide electrolytes are independently selected from Li_{1.4}Al_{0.4}Ti_{1.6}(PO₄)₃ or Li₇La₃Zr₂O₁₂.

In some specific implementations, the semi-solid state lithium battery provided in this application has the following performance parameters: The lowest electrolyte solution retention coefficient is 1.25 g/Ah~1.45 g/Ah, the capacity retention rate after high-temperature cycle 1000cls is more than 65%, the expansion rate after high-temperature cycle 1000cls is less than 14%, the capacity retention rate at -20°C is more than 55%, the quantity of pulse discharge times at -20°C is more than 45, the rate discharge capacity at 2 C/0.2 C is more than 92%, and the temperature of the thermal shock test chamber is more than 130°C.

The present invention further provides a preparation method for the semi-solid state lithium battery, including the following steps:
forming a positive active layer on a positive current collector by using a positive slurry including a positive active material, a conductive agent, a binder, and an oxide electrolyte, to obtain a positive electrode plate, and forming a negative active layer on a negative current collector by using a negative slurry including a negative active material, a conductive agent, and a binder; and
assembling the positive electrode plate, the negative electrode plate, a separator, and an electrolyte solution into the semi-solid state lithium battery.

In some specific implementations, the positive slurry may be prepared according to the following method:
mixing the positive active material, the conductive agent, the binder, the oxide electrolyte, and a solvent to obtain the positive slurry.

In some specific implementations, the positive slurry may be prepared according to the following method:
pre-sintering the oxide electrolyte and the positive active material to obtain an oxide electrolyte/positive active material compound; and
mixing the compound, the binder, the conductive agent, and a solvent to obtain the positive slurry.

In some specific implementations, a temperature for pre-sintering is not greater than 400°C, preferably, is 200°C~400°C. First, the oxide electrolyte and the positive active material are pre-sintered, so that the oxide electrolyte and the positive active material are more uniformly mixed, thereby further improving performance of the battery.

After the positive slurry is obtained, the positive slurry is coated on the positive current collector, and the positive current collector is dried, cold-pressed, cut, slit, and dried to obtain the positive electrode plate.

In some specific implementations, the negative slurry further includes an oxide electrolyte. A preparation method for the negative electrode plate is similar to the preparation method for the positive electrode plate. Details are not described in this application again.

In some specific implementations, a preparation method for forming a coating containing an oxide electrolyte on at least one side, preferably two sides, of the separator is as follows:
coating a slurry containing the oxide electrolyte and a binder on a surface of the separator, and forming the coating after drying and cold pressing.

In this application, there is no special limitation on a coating method, and coating may be performed in a manner of spraying, gravure printing, or the like.

In some specific implementations, before the positive active layer or the negative active layer is formed, a step of forming a coating containing an oxide electrolyte on the positive current collector or the negative current collector is further included. The coating may be formed on one side that is of the positive current collector and that faces the positive active layer or on one side that is of the negative current collector and that faces the negative active layer, or the coating may be formed on two sides of the positive current collector or the negative current collector. A method for forming the coating is described above. Details are not described in this application again.

The semi-solid state lithium-ion battery provided in this application may be used in consumer products, for example, terminals, including devices such as a mobile phone, a watch, and a pad, and may also be used in power products, for example, automobiles, to improve use performance of the products at a low or high temperature, and prolong a service life of the battery.

Based on this, this application further provides a terminal. The terminal includes the semi-solid state lithium battery described in the foregoing technical solutions. A person skilled in the art can understand that the terminal mentioned in this application may be any device with communication and storage functions, such as a smartphone, a cellular phone, a cordless phone, a session initiation protocol (Session Initiation Protocol, SIP) phone, a tablet computer, a personal digital assistant (Personal Digital Assistant, PAD), a notebook computer, a digital camera, an e-book reader, a portable multimedia player, a handheld device with a wireless communication function, a computing device or another processing device connected to a wireless modem, an in-vehicle device, a wearable device, and a 5G terminal device. This is not limited in the embodiments of this application.

The following describes in detail the lithium-ion battery provided in this application and the preparation method therefor with reference to the embodiments.

### Embodiments 1~8 and Comparative Examples 1~4

### (1) Preparation of an electrolyte solution

Ethylene carbonate (EC), propylene carbonate (PC), and diethyl carbonate (DEC) are uniformly mixed according to a mass ratio of 3:3:4 in an argon atmosphere glovebox with water content less than 10 ppm, to obtain a non-aqueous solvent; and fully dried lithium salt LiPF₆ is dissolved in the non-aqueous solvent, so that a mass percentage of LiPF₆ in the electrolyte solution is 12.5%, and the electrolyte solution is obtained after uniform mixing.

### (2) Preparation of current collectors

Cu foil with a thickness of 8 µm is used as a negative current collector, and Al foil with a thickness of 8 µm is used as a positive current collector.

### (3) Preparation of a negative electrode plate

A negative active material synthetic graphite/Si composite material, a binder polymerized styrene butadiene rubber (SBR), and a thickener sodium carboxymethylcellulose (CMC) are mixed according to a weight ratio of 97.4:1.2:1.4, and an obtained mixture is fully stirred and mixed in an appropriate amount of deionized water, to form a uniform negative slurry; and the slurry is coated on the negative current collector, and the negative current collector is dried and cold-pressed to obtain the negative electrode plate.

### (4) Preparation of a positive electrode plate

Lithium cobalt oxide (LiCoO₂), conductive carbon black (Super P), and polyvinylidene fluoride are weighed according to a mass ratio of 97:1.4:1.6; a solid electrolyte is added to the components according to each formula shown in Table 1 for mixing; and N-methylpyrrolidone (NMP) is added to an obtained mixture, and uniformly stirred with the obtained mixture in a vacuum mixer, to obtain a positive slurry, where solid content of the positive slurry is 72 wt%. The positive slurry is uniformly coated on the positive current collector to obtain a positive film. The obtained positive film is dried at 85°C, cold-pressed, cut, and slit, and then dried at 85°C under a vacuum condition for 4 hours to obtain the positive electrode plate.

**Table 1 Formulas of positive electrodes of the lithium-ion batteries provided in Embodiments 1~8 and Comparative Examples 1~4**

| Group | Solid electrolyte | | |
|---|---|---|---|
| | Type | Dosage (wt%) | D50 |
| Comparative Example 1 | / | / | / |
| Comparative Example 2 | Li_{1.4}Al_{0.4}Ti_{1.6}(PO₄)₃ | 5 | 0.2 nm |
| Comparative Example 3 | Li_{1.4}Al_{0.4}Ti_{1.6}(PO₄)₃ | 0.1 | 0.2 nm |
| Comparative Example 4 | Li_{1.4}Al_{0.4}Ti_{1.6}(PO₄)₃ | 0.5 | 1.5 µm |
| Embodiment 1 | Li_{1.4}Al_{0.4}Ti_{1.6}(PO₄)₃ | 0.5 | 0.05 µm |
| Embodiment 2 | Li_{1.4}Al_{0.4}Ti_{1.6}(PO₄)₃ | 0.5 | 0.2 µm |
| Embodiment 3 | Li_{1.4}Al_{0.4}Ti_{1.6}(PO₄)₃ | 0.5 | 0.5 µm |
| Embodiment 4 | Li_{1.4}Al_{0.4}Ti_{1.6}(PO₄)₃ | 0.5 | 1 µm |
| Embodiment 5 | Li_{1.4}Al_{0.4}Ti_{1.6}(PO₄)₃ | 1 | 0.2 µm |
| Embodiment 6 | Li_{1.4}Al_{0.4}Ti_{1.6}(PO₄)₃ | 3 | 0.2 µm |
| Embodiment 7 | Li_{1.4}Al_{0.4}Ti_{1.6}(PO₄)₃ | 0.2 | 0.2 µm |
| Embodiment 8 | Li₇La₃Zr₂O₁₂ | 0.5 | 0.2 µm |

### (5) Preparation of a separator

Polyethylene (PE) with a thickness of 9 µm is used as the separator.

### (6) Preparation of a lithium-ion battery

The positive electrode plate, the separator, and the negative electrode plate are stacked in sequence, where the separator is located between the positive electrode plate and the negative electrode plate for isolation; then the positive electrode plate, the separator, and the negative electrode plate are wound to obtain an electrode assembly; and the electrode assembly is placed in an outer packing aluminum-plastic film, the electrolyte solution prepared in step (1) is injected into a dried battery, and processes such as vacuum packaging, standing, formation, and shaping are performed to complete preparation of the lithium-ion battery.

Performance tests are performed on the lithium-ion batteries prepared in the foregoing embodiments and comparative examples. Test methods are as follows:

### (1) Lithium-ion battery cycle test method

The battery is placed in a 45°C constant-temperature chamber; constant-current charge is performed on the battery at 1.5 C until a voltage of the battery is 4.48 V; the battery is charged at a constant voltage of 4.48 V until a rate is 0.05 C; and constant-current discharge is performed on the battery at 1.0 C until the voltage of the battery is 3.0 V This is a charge-discharge cycle process. A cyclic charge-discharge test is performed for 1000 times in the foregoing manner, and a capacity retention rate and an expansion rate of a thickness of the battery are monitored. The capacity retention rate = a remaining discharge capacity/an initial discharge capacity × 100%.

### (2) Low-temperature discharge capacity

The battery is quickly discharged at normal temperature, and rests for 5 min; then the battery is conventionally charged, and after resting for 5 minutes, the battery is discharged at 0.2 C until a voltage is 3.0 V. A discharge capacity at this time is recorded as a normal temperature capacity.

The battery rests for 5 minutes after being discharged and then is conventionally charged, and after resting for 2 h at -20°C±2°C, the battery is discharged at 0.2 C to reach a cutoff voltage 3.0 V. A value of the discharge capacity/the normal temperature capacity is recorded.

### (3) Rate discharge capacity

The tested discharge capacity of the to-be-tested battery is recorded as the normal temperature capacity; the battery is conventionally charged after resting for 5 min; and after resting for 5 min, the battery is discharged at 2.0 C until the voltage is 3.0 V, and the value of the discharge capacity/the normal temperature capacity is recorded.

### (4) Quantity of pulse discharge times at a low temperature

The battery is placed in a -20°C constant-temperature chamber; constant-current discharge is performed on the battery at 0.2 C until the battery is in an SOC of 80%; and the battery is discharged with a current of 1.5 A for 15s, and is left to be standstill for 2s. A discharge-standing process is performed cyclically, until the voltage of the battery is less than 3.0 V, and a cycle quantity is recorded.

### (5) Lithium-ion battery thermal shock test method

The battery is fully charged at 20°C±5°C; a temperature of a thermal shock test chamber is set to 25°C; the temperature of the thermal shock test chamber is raised to a specified temperature °C±2°C at a temperature raising rate of 5°C±2°C after the temperature is maintained at 25°C for 30 min; and the temperature is maintained at °C±2°C for 60 min, and the temperature of the thermal shock test chamber is monitored in this process.

### (6) Method for testing an electrolyte solution retention coefficient of a battery

The battery is disassembled and is soaked in a DMC solution for a plurality of times, to wash out the electrolyte solution and the lithium salt; all solids are weighed after being dried. According to a weight loss method, an electrolyte solution retention amount/a capacity of the battery = a value of an electrolyte solution retention coefficient.

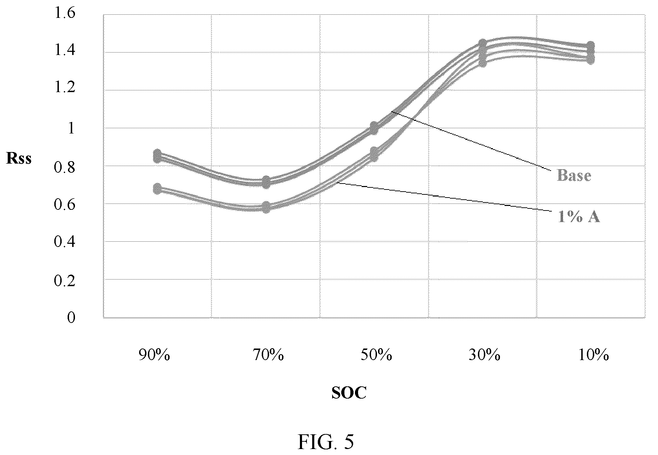

For results, refer to Table 2, FIG. 4, and FIG. 5. Table 2 shows performance parameters of the lithium-ion batteries provided in Embodiments 1~8 and Comparative Examples 1~4 in this application; FIG. 4 shows capacity retention rates of batteries provided in Comparative Example 1 and Embodiment 5 at -20°C, where Base is the battery of Comparative Example 1 and 1%A is the battery of Embodiment 5; and FIG. 5 shows SOC-RSS curves of batteries provided in Comparative Example 1 and Embodiment 5, where Base is the battery of Comparative Example 1, and 1%A is the battery of Embodiment 5.

**Table 2 Performance parameters of the lithium-ion batteries provided in Embodiments 1~8 and Comparative Examples 1~4 in this application**

| Group | Lowest electrolyte solution retention coefficient (g/Ah) | Capacity retention rate after high-temperature cycle 1000cls (%) | Expansion rate after high-temperature cycle 1000cls (%) | Low-temperature performance Capacity retention rate at -20°C (%) | Quantity of pulse discharge times at - 20°C (times) | Rate discharge performance at 2 C/0.2 C (%) | Thermal shock test chamber °C |
|---|---|---|---|---|---|---|---|
| Comparative Example 1 | 1.55 | 58.1 | 15 | 50.5 | 20 | 90 | 126 |
| Comparative Example 2 | 1.59 | 58.5 | 15 | 51.1 | 25 | 89 | 127 |
| Comparative Example 3 | 1.58 | 58.0 | 15 | 50.8 | 21 | 90 | 126 |
| Comparative Example 4 | 1.55 | 58.9 | 15 | 51.3 | 25 | 89 | 126 |
| Embodiment 1 | 1.41 | 69.2 | 13.1 | 55.2 | 49 | 92.5 | 130 |
| Embodiment 2 | 1.35 | 70.5 | 12.2 | 56.4 | 45 | 93.7 | 131 |
| Embodiment 3 | 1.4 | 71.2 | 12 | 57.2 | 72 | 92.8 | 132 |
| Embodiment 4 | 1.39 | 71.5 | 11.6 | 56.0 | 80 | 92.1 | 132 |
| Embodiment 5 | 1.39 | 71.5 | 11.6 | 56.0 | 80 | 94 | 133 |
| Embodiment 6 | 1.33 | 70.0 | 12 | 58.2 | 85 | 92.9 | 133 |
| Embodiment 7 | 1.39 | 71.5 | 11.6 | 56.0 | 80 | 91.7 | 130 |
| Embodiment 8 | 1.39 | 71.9 | 11.9 | 57.0 | 83 | 91.2 | 131 |

It can be learned from Table 2 that doping an electrode with the solid electrolyte in 0.01 µm~1 µm can significantly increase the capacity retention rate of the lithium-ion battery after high-temperature cycle, the capacity retention rate of the lithium-ion battery at a low temperature, the quantity of pulse discharge times of the lithium-ion battery at a low temperature, the rate discharge performance of the lithium-ion battery, and the temperature of the thermal shock test chamber for the lithium-ion battery, and reduce the lowest electrolyte solution retention coefficient of the lithium-ion battery and reduce the expansion rate of the lithium-ion battery after high-temperature cycle.

### Embodiments 9~15 and Comparative Examples 5~8

### (1) Preparation of an electrolyte solution

Ethylene carbonate (EC), propylene carbonate (PC), and diethyl carbonate (DEC) are uniformly mixed according to a mass ratio of 3:3:4 in an argon atmosphere glovebox with water content less than 10 ppm, to obtain a non-aqueous solvent; and fully dried lithium salt LiPF₆ is dissolved in the non-aqueous solvent, so that a mass percentage of LiPF₆ in the electrolyte solution is 12.5%, and the electrolyte solution is obtained after uniform mixing.

### (2) Preparation of current collectors

Cu foil with a thickness of 8 µm is used as a negative current collector, and Al foil with a thickness of 8 µm is used as a positive current collector.

### (3) Preparation of a negative electrode plate

A negative active material synthetic graphite/Si composite material, a binder polymerized styrene butadiene rubber (abbreviated as SBR), and a thickener sodium carboxymethylcellulose (abbreviated as CMC) are weighed according to a weight ratio of 97.4:1.2:1.4; a solid electrolyte is added to the components according to each formula shown in Table 3 for mixing; an obtained mixture is fully stirred and mixed in an appropriate amount of deionized water to form a uniform negative slurry; and the slurry is coated on the negative current collector, and the negative current collector is dried and cold-pressed to obtain the negative electrode plate.

**Table 3 Formulas of negative electrodes of the lithium-ion batteries provided in Embodiments 9~15 and Comparative Examples 5~8**

| Group | Solid electrolyte | | |
|---|---|---|---|
| | Type | Dosage | D50 |
| Comparative Example 5 | / | / | / |
| Comparative Example 6 | Li_{1.4}Al_{0.4}Ti_{1.6}(PO₄)₃ | 5 | 0.2 nm |
| Comparative Example 7 | Li_{1.4}Al_{0.4}Ti_{1.6}(PO₄)₃ | 0.1 | 0.2 nm |
| Comparative Example 8 | Li_{1.4}Al_{0.4}Ti_{1.6}(PO₄)₃ | 0.5 | 1.5 µm |
| Embodiment 9 | Li_{1.4}Al_{0.4}Ti_{1.6}(PO₄)₃ | 0.5 | 0.05 µm |
| Embodiment 10 | Li_{1.4}Al_{0.4}Ti_{1.6}(PO₄)₃ | 0.5 | 0.2 µm |
| Embodiment 11 | Li_{1.4}Al_{0.4}Ti_{1.6}(PO₄)₃ | 0.5 | 0.5 µm |
| Embodiment 12 | Li_{1.4}Al_{0.4}Ti_{1.6}(PO₄)₃ | 0.5 | 1 µm |
| Embodiment 13 | Li_{1.4}Al_{0.4}Ti_{1.6}(PO₄)₃ | 1 | 0.2 µm |
| Embodiment 14 | Li_{1.4}Al_{0.4}Ti_{1.6}(PO₄)₃ | 3 | 0.2 µm |
| Embodiment 15 | Li_{1.4}Al_{0.4}Ti_{1.6}(PO₄)₃ | 0.2 | 0.2 µm |

### (4) Preparation of a positive electrode plate

Lithium cobalt oxide (LiCoO₂), conductive carbon black (Super P), and polyvinylidene fluoride are weighed according to a mass ratio of 97:1.4:1.6; 0.5 wt% of solid electrolyte (Li_{1.4}Al_{0.4}Ti_{1.6}(PO₄)₃) with a grain size of 0.2 µm is added to the components for mixing; and N-methylpyrrolidone (NMP) is added to an obtained mixture, and uniformly stirred with the obtained mixture in a vacuum mixer, to obtain a positive slurry, where solid content of the positive slurry is 72 wt%. The positive slurry is uniformly coated on the positive current collector to obtain a positive film. The obtained positive film is dried at 85°C, cold-pressed, cut, and slit, and then dried at 85°C under a vacuum condition for 4 hours to obtain the positive electrode plate.

### (5) Preparation of a separator

Polyethylene (PE) with a thickness of 9 µm is used as the separator.

### (6) Preparation of a lithium-ion battery

The positive electrode plate, the separator, and the negative electrode plate are stacked in sequence, where the separator is located between the positive electrode plate and the negative electrode plate for isolation; then the positive electrode plate, the separator, and the negative electrode plate are wound to obtain an electrode assembly; and the electrode assembly is placed in an outer packing aluminum-plastic film, the electrolyte solution prepared in step (1) is injected into a dried battery, and processes such as vacuum packaging, standing, formation, and shaping are performed to complete preparation of the lithium-ion battery.

Performance tests are performed on the lithium-ion batteries prepared in the foregoing embodiments and comparative examples. Test methods are described above. For results, refer to Table 4. Table 4 shows performance parameters of the lithium-ion batteries provided in Embodiments 9~15 and Comparative Examples 5~8 in this application.

**Table 4 Performance parameters of the lithium-ion batteries provided in Embodiments 9~15 and Comparative Examples 5~8 in this application**

| Group | Lowest electrolyte solution retention coefficient (g/Ah) | Capacity retention rate after high-temperature cycle 1000cls (%) | Expansion rate after high-temperature cycle 1000cls (%) | Low-temperature performance Capacity retention rate at - 20°C (%) | Quantity of pulse discharge times at - 20°C (times) | Rate discharge performance at 2 C/0.2 C (%) | Safety Thermal shock test chamber °C |
|---|---|---|---|---|---|---|---|
| Comparative Example 5 | 1.35 | 70.5 | 12.2 | 56.4 | 45 | 93.7 | 131 |
| Comparative Example 6 | 1.39 | 69.5 | 13.3 | 57.1 | 43 | 88 | 128 |
| Comparative Example 7 | 1.38 | 68.0 | 12.5 | 55.0 | 42 | 99 | 130 |
| Comparative Example 8 | 1.45 | 68.7 | 12.4 | 55.6 | 43 | 88 | 129 |
| Embodiment 9 | 1.31 | 71.2 | 12.1 | 60.2 | 62 | 94.5 | 132 |
| Embodiment 10 | 1.34 | 73.5 | 12.2 | 60.5 | 59 | 94.7 | 132 |
| Embodiment 11 | 1.31 | 75.5 | 11.2 | 62.4 | 80 | 94.7 | 133 |
| Embodiment 12 | 1.29 | 73.8 | 11.6 | 66.0 | 71 | 94.1 | 135 |
| Embodiment 13 | 1.29 | 74.3 | 11.6 | 66.0 | 77 | 94 | 133 |
| Embodiment 14 | 1.33 | 75.0 | 11.2 | 58.2 | 70 | 94.9 | 133 |
| Embodiment 15 | 1.31 | 71.5 | 11.6 | 66.0 | 75 | 94.7 | 132 |

It can be learned from Table 4 that doping a positive electrode and a negative electrode with the solid electrolyte in 0.01 µm~1 µm can significantly increase the capacity retention rate of the lithium-ion battery after high-temperature cycle, the capacity retention rate of the lithium-ion battery at a low temperature, the quantity of pulse discharge times of the lithium-ion battery at a low temperature, the rate discharge performance of the lithium-ion battery, and the temperature of the thermal shock test chamber for the lithium-ion battery, and reduce the lowest electrolyte solution retention coefficient of the lithium-ion battery and reduce the expansion rate of the lithium-ion battery after high-temperature cycle.

### Embodiments 16~21 and Comparative Example 9

### (1) Preparation of an electrolyte solution

Ethylene carbonate (EC), propylene carbonate (PC), and diethyl carbonate (DEC) are uniformly mixed according to a mass ratio of 3:3:4 in an argon atmosphere glovebox with water content less than 10 ppm, to obtain a non-aqueous solvent; and fully dried lithium salt LiPF₆ is dissolved in the non-aqueous solvent, so that a mass percentage of LiPF₆ in the electrolyte solution is 12.5%, and the electrolyte solution is obtained after uniform mixing.

### (2) Preparation of current collectors

Cu foil with a thickness of 8 µm is used as a negative current collector, and Al foil with a thickness of 8 µm is used as a positive current collector.

### (3) Preparation of a negative electrode plate

A negative active material synthetic graphite/Si composite material, a binder polymerized styrene butadiene rubber (abbreviated as SBR), and a thickener sodium carboxymethylcellulose (abbreviated as CMC) are weighed according to a weight ratio of 97.4:1.2:1.4; 0.5 wt% of solid electrolyte (Li_{1.4}Al_{0.4}Ti_{1.6}(PO₄)₃) with a grain size of 0.5 µm is added to the components for mixing; an obtained mixture is fully stirred and mixed in an appropriate amount of deionized water to form a uniform negative slurry; and the slurry is coated on the negative current collector, and the negative current collector is dried and cold-pressed to obtain the negative electrode plate.

### (4) Preparation of a positive electrode plate

Lithium cobalt oxide (LiCoO₂), conductive carbon black (Super P), and polyvinylidene fluoride are weighed according to a mass ratio of 97:1.4:1.6; 0.5 wt% of solid electrolyte (Li_{1.4}Al_{0.4}Ti_{1.6}(PO₄)₃) with a grain size of 0.2 µm is added to the components for mixing; and N-methylpyrrolidone (NMP) is added to an obtained mixture, and uniformly stirred with the obtained mixture in a vacuum mixer, to obtain a positive slurry, where solid content of the positive slurry is 72 wt%. The positive slurry is uniformly coated on the positive current collector to obtain a positive film. The obtained positive film is dried at 85°C, cold-pressed, cut, and slit, and then dried at 85°C under a vacuum condition for 4 hours to obtain the positive electrode plate.

### (5) Preparation of a separator

Polyethylene (PE) with a thickness of 9 µm is used as the separator. A slurry shown in Table 5 is sprayed on one side that is of the separator and that is close to a positive electrode. The slurry uses NMP as a solvent, and includes 0.1 wt% of binder SBR and 10 wt% of solid electrolyte with D50 of 0.5 µm. A slurry shown in Table 5 is sprayed on one side that is of the separator and that is close to a negative electrode. The slurry uses water as a solvent, and includes 0.1 wt% of binder SBR and 10 wt% of solid electrolyte. Solid electrolyte coatings with thicknesses of 1 µm are respectively formed on the two sides of the separator after the slurries are dried.

**Table 5 Formulas of coatings that are on separators provided in the embodiments and the comparative example and that are close to positive electrodes**

| Group | Solid electrolyte (positive electrode) | Solid electrolyte (negative electrode) |
|---|---|---|
| Comparative Example 9 | / | / |
| Embodiment 16 | Li_{1.4}Al_{0.4}Ti_{1.6}(PO₄)₃ | / |
| Embodiment 17 | / | Li_{1.4}Al_{0.4}Ti_{1.6}(PO₄)₃ |
| Embodiment 18 | Li_{1.4}Al_{0.4}Ti_{1.6}(PO₄)₃ | Li₇La₃Zr₂O₁₂ |
| Embodiment 19 | Li_{1.4}Al_{0.4}Ti_{1.6}(PO₄)₃ | Li_{1.4}Al_{0.4}Ti_{1.6}(PO₄)₃ |
| Embodiment 20 | Li₇La₃Zr₂O₁₂ | Li_{1.4}Al_{0.4}Ti_{1.6}(PO₄)₃ |
| Embodiment 21 | Li₇La₃Zr₂O₁₂ | Li₇La₃Zr₂O₁₂ |

### (6) Preparation of a lithium-ion battery

The positive electrode plate, the separator, and the negative electrode plate are stacked in sequence, where the separator is located between the positive electrode plate and the negative electrode plate for isolation; then the positive electrode plate, the separator, and the negative electrode plate are wound to obtain an electrode assembly; and the electrode assembly is placed in an outer packing aluminum-plastic film, the electrolyte solution prepared in step (1) is injected into a dried battery, and processes such as vacuum packaging, standing, formation, and shaping are performed to complete preparation of the lithium-ion battery.

Performance tests are performed on the lithium-ion batteries prepared in the foregoing embodiments and comparative example. Test methods are described above. For results, refer to Table 6. Table 6 shows performance parameters of the lithium-ion batteries provided in Embodiments 16~21 and Comparative Example 9 in this application.

**Table 6 Performance parameters of the lithium-ion batteries provided in Embodiments 16~21 and Comparative Example 9 in this application**

| Group | Lowest electrolyte solution retention coefficient (g/Ah) | Capacity retention rate after high-temperature cycle 1000cls (%) | Expansion rate after high-temperature cycle 1000cls (%) | Low-temperature performance Capacity retention rate at - 20°C (%) | Quantity of pulse discharge times at - 20°C (times) | Rate discharge performance at 2 C/0.2 C (%) | Safety Thermal shock test chamber °C |
|---|---|---|---|---|---|---|---|
| Comparative Example 9 | 1.31 | 75.5 | 11.2 | 62.4 | 80 | 94.7 | 133 |
| Embodiment 16 | 1.31 | 77.5 | 11.3 | 67.1 | 99 | 95.5 | 135 |
| Embodiment 17 | 1.28 | 78.0 | 11.5 | 65.0 | 92 | 95.1 | 134 |
| Embodiment 18 | 1.28 | 77.2 | 11.1 | 67.2 | 102 | 94.9 | 135 |
| Embodiment 19 | 1.27 | 79.5 | 11.2 | 67.5 | 105 | 95 | 135 |
| Embodiment 20 | 1.27 | 79.5 | 11.2 | 66.4 | 90 | 94.9 | 134 |
| Embodiment 21 | 1.29 | 78.8 | 11.6 | 66.0 | 91 | 94.8 | 134 |

It can be learned from Table 6 that simultaneously doping a positive electrode and a negative electrode with the solid electrolyte in 0.01 µm~ 1 µm to simultaneously form solid electrolyte layers on the two sides of the separator can significantly increase the capacity retention rate of the lithium-ion battery after high-temperature cycle, the capacity retention rate of the lithium-ion battery at a low temperature, the quantity of pulse discharge times of the lithium-ion battery at a low temperature, the rate discharge performance of the lithium-ion battery, and the temperature of the thermal shock test chamber for the lithium-ion battery, and reduce the lowest electrolyte solution retention coefficient of the lithium-ion battery and reduce the expansion rate of the lithium-ion battery after high-temperature cycle.

### Embodiments 22~23 and Comparative Example 10

### (1) Preparation of an electrolyte solution

Ethylene carbonate (EC), propylene carbonate (PC), and diethyl carbonate (DEC) are uniformly mixed according to a mass ratio of 3:3:4 in an argon atmosphere glovebox with water content less than 10 ppm, to obtain a non-aqueous solvent; and fully dried lithium salt LiPF₆ is dissolved in the non-aqueous solvent, so that a mass percentage of LiPF₆ in the electrolyte solution is 12.5%, and the electrolyte solution is obtained after uniform mixing.

### (2) Preparation of current collectors

Cu foil with a thickness of 8 µm is used as a negative current collector, and Al foil with a thickness of 8 µm is used as a positive current collector. According to the formulas shown in Table 1, a slurry of each formula shown in Table 7 is separately sprayed on surfaces of the negative current collector and the positive current collector. The slurry uses NMP as a solvent, and includes 0.1 wt% of binder SBR and 10 wt% of solid electrolyte with D50 of 0.5 µm. Solid electrolyte coatings with thicknesses of 1 µm are respectively formed on the surfaces of the negative current collector and the positive current collector after the slurry is dried.

**Table 7 Formulas of coatings on current collectors of the lithium-ion batteries provided in the embodiments and the comparative example**

| Group | Solid electrolyte |
|---|---|
| Comparative Example 10 | / |
| Embodiment 22 | Li_{1.4}Al_{0.4}Ti_{1.6}(PO₄)₃ |
| Embodiment 23 | Li₇La₃Zr₂O₁₂ |

### (3) Preparation of a negative electrode plate

A negative active material synthetic graphite/Si composite material, a binder polymerized styrene butadiene rubber (abbreviated as SBR), and a thickener sodium carboxymethylcellulose (abbreviated as CMC) are weighed according to a weight ratio of 97.4:1.2:1.4; 0.5 wt% of solid electrolyte (Li_{1.4}Al_{0.4}Ti_{1.6}(PO₄)₃) with a grain size of 0.5 µm is added to the components for mixing; an obtained mixture is fully stirred and mixed in an appropriate amount of deionized water to form a uniform negative slurry; and the slurry is coated on the negative current collector, and the negative current collector is dried and cold-pressed to obtain the negative electrode plate.

### (4) Preparation of a positive electrode plate

Lithium cobalt oxide (LiCoO₂), conductive carbon black (Super P), and polyvinylidene fluoride are weighed according to a mass ratio of 97:1.4:1.6; 0.5 wt% of solid electrolyte (Li_{1.4}Al_{0.4}Ti_{1.6}(PO₄)₃) with a grain size of 0.2 µm is added to the components for mixing; and N-methylpyrrolidone (NMP) is added to an obtained mixture, and uniformly stirred with the obtained mixture in a vacuum mixer, to obtain a positive slurry, where solid content of the positive slurry is 72 wt%. The positive slurry is uniformly coated on the positive current collector to obtain a positive film. The obtained positive film is dried at 85°C, cold-pressed, cut, and slit, and then dried at 85°C under a vacuum condition for 4 hours to obtain the positive electrode plate.

### (5) Preparation of a separator

Polyethylene (PE) with a thickness of 9 µm is used as the separator. Slurries of formulas shown in Table 8 are respectively sprayed on two sides of the separator. The slurries each use NMP as a solvent, and include 0.1 wt% of binder SBR and 10 wt% of solid electrolyte with D50 of 0.5 µm. Solid electrolyte coatings with thicknesses of 1 µm are respectively formed on the two sides of the separator after the slurries are dried.

**Table 8 Formulas of coatings on separators of the lithium-ions provided in the embodiments and the comparative example**

| Group | | Electrolyte |
|---|---|---|
| Comparative Example 10 | Positive side of the separator | Li_{1.4}Al_{0.4}Ti_{1.6}(PO₄)₃ |
| | Negative side of the separator | Li₇La₃Zr₂O₁₂ |
| Embodiment 22 | Positive side of the separator | Li_{1.4}Al_{0.4}Ti_{1.6}(PO₄)₃ |
| | Negative side of the separator | Li₇La₃Zr₂O₁₂ |
| Embodiment 23 | Positive side of the separator | Li_{1.4}Al_{0.4}Ti_{1.6}(PO₄)₃ |
| | Negative side of the separator | Li₇La₃Zr₂O₁₂ |

### (6) Preparation of a lithium-ion battery

The positive electrode plate, the separator, and the negative electrode plate are stacked in sequence, where the separator is located between the positive electrode plate and the negative electrode plate for isolation; then the positive electrode plate, the separator, and the negative electrode plate are wound to obtain an electrode assembly; and the electrode assembly is placed in an outer packing aluminum-plastic film, the electrolyte solution prepared in step (1) is injected into a dried battery, and processes such as vacuum packaging, standing, formation, and shaping are performed to complete preparation of the lithium-ion battery.

Performance tests are performed on the lithium-ion batteries prepared in the foregoing embodiments and comparative example. Test methods are described above. For results, refer to Table 9. Table 9 shows performance parameters of the lithium-ion batteries provided in Embodiments 22~23 and Comparative Example 10 in this application.

**Table 9 Performance parameters of the lithium-ion batteries provided in Embodiments 22~23 and Comparative Example 10 in this application**

| Group | Safety/Thermal shock test chamber °C | Safety during puncture | Safety during extrusion |
|---|---|---|---|
| Comparative Example 10 | 133 | No pass | No pass |
| Embodiment 22 | 135 | pass | pass |
| Embodiment 23 | 136 | pass | pass |

It can be learned from Table 9 that forming the solid electrolyte layers on the current collectors can significantly improve safety of the batteries during puncture and extrusion.

The lithium-ion battery provided in the present invention may be used in consumer products, for example, terminals, including devices such as a mobile phone, a watch, and a pad, and may also be used in power products, for example, automobiles, to improve use performance of the products at a low or high temperature, and prolong a service life of the battery.

The foregoing descriptions are merely specific implementations of this application, but are not intended to limit the protection scope of this application. Any change or replacement made within the technical scope disclosed in this application shall fall within the protection scope of this application. Therefore, the protection scope of this application shall be subject to the protection scope of the claims.

## Claims

1. A semi-solid state lithium battery, comprising:
an electrolyte solution;
a separator disposed in the electrolyte solution; and
a positive electrode plate and a negative electrode plate that are respectively disposed on two sides of the separator, wherein
the positive electrode plate comprises a positive current collector and a positive active layer disposed on the positive current collector, the positive active layer is doped with 0.1 wt%~5 wt% of oxide electrolyte, and D50 of the oxide electrolyte is 0.05 µm~ 1.2 µm; and
the negative electrode plate comprises a negative current collector and a negative active layer disposed on the negative current collector.

2. The semi-solid state lithium battery according to claim 1, wherein the negative active layer is doped with 0.1 wt%~5 wt% of oxide electrolyte, and D50 of the oxide electrolyte is 0.05 µm~1.2 µm.

3. The semi-solid state lithium battery according to claim 1 or 2, wherein a coating is disposed on at least one side of the separator, and the coating comprises an oxide electrolyte.

4. The semi-solid state lithium battery according to claim 3, wherein a first coating is disposed on one side that is of the separator and that faces the positive electrode plate, and a second coating is disposed on one side that is of the separator and that faces the negative electrode plate.

5. The semi-solid state lithium battery according to claim 4, wherein thicknesses of the first coating and the second coating are independently 0.5 µm-5 µm; and
D50 of the oxide electrolytes in the first coating and the second coating is independently 0.05 µm~1.2 µm.

6. The semi-solid state lithium battery according to any one of claims 1~2, wherein a third coating is disposed between the positive current collector and the positive active layer in the positive electrode plate, and the third coating comprises an oxide electrolyte.

7. The semi-solid state lithium battery according to claim 6, wherein a fourth coating is disposed on one side that is of the positive current collector and that is away from the positive active layer, and the fourth coating comprises an oxide electrolyte.

8. The semi-solid state lithium battery according to claim 7, wherein thicknesses of the third coating and the fourth coating are independently 0.5 µm-5 µm; and
D50 of the oxide electrolytes in the third coating and the fourth coating is independently 0.05 µm~1.2 µm.

9. The semi-solid state lithium battery according to any one of claims 1~2, wherein a fifth coating is disposed between the negative current collector and the negative active layer in the negative electrode plate, and the fifth coating comprises an oxide electrolyte.

10. The semi-solid state lithium battery according to claim 9, wherein a sixth coating is disposed on one side that is of the negative current collector and that is away from the negative active layer, and the sixth coating comprises an oxide electrolyte.

11. The semi-solid state lithium battery according to claim 9, wherein thicknesses of the fifth coating and the sixth coating are independently 0.5 µm-5 µm; and
D50 of the oxide electrolytes in the fifth coating and the sixth coating is independently 0.05 µm~1.2 µm.

12. The semi-solid state lithium battery according to any one of claims 1~2, wherein the oxide electrolyte is selected from one or more of a NASICON structural material, a perovskite structural material, an anti-perovskite structural material, a LISICON structure, and a garnet structural material.

13. The semi-solid state lithium battery according to claim 12, wherein the oxide electrolyte is selected from one or more of Li_{1.4}Al_{0.4}Ti_{1.6}(PO4)₃, Li_{1.5}Al_{0.5}Ge_{1.5}(PO4)₃, Li₇La₃Zr₂O₁₂, Li_{6.4}La₃Zr₂Ta_{0.6}O₁₂, and La_{0.56}Li_{0.33}TiO₃.

14. The semi-solid state lithium battery according to claim 13, wherein a positive active material in the positive active layer is selected from one or more of lithium cobalt oxide, manganese-rich lithium, nickel-manganese spinel, lithium iron phosphate, lithium iron manganese phosphate, and lithium manganate; and
a negative active material in the negative active layer is selected from one or more of a carbon material, a silica-based material, metal lithium, and lithium alloy.

15. The semi-solid state lithium battery according to claim 14, wherein the positive active layer is doped with 0.15 wt%~3.5 wt% of oxide electrolyte, D50 of the oxide electrolyte is 0.05 µm~1 µm, and the oxide electrolyte is selected from Li_{1.4}Al_{0.4}Ti_{1.6}(PO₄)₃ or Li₇La₃Zr₂O₁₂.

16. The semi-solid state lithium battery according to claim 15, wherein the negative active layer is doped with 0.15 wt%~3.5 wt% of oxide electrolyte, D50 of the oxide electrolyte is 0.05 µm~1 µm, and the oxide electrolyte is selected from Li_{1.4}Al_{0.4}Ti_{1.6}(PO₄)₃.

17. The semi-solid state lithium battery according to claim 16, wherein a first coating is disposed on one side that is of the separator and that faces the positive electrode plate, a second coating is disposed on one side that is of the separator and that faces the negative electrode plate, the first coating comprises an oxide electrolyte, and the second coating comprises an oxide electrolyte; and
D50 of the oxide electrolytes in the first coating and the second coating is independently 0.05 µm~ 1.2 µm, and the oxide electrolytes are independently selected from Li_{1.4}Al_{0.4}Ti_{1.6}(PO₄)₃ or Li₇La₃Zr₂O₁₂.

18. The semi-solid state lithium battery according to claim 17, wherein a third coating is disposed between the positive current collector and the positive active layer in the positive electrode plate, the third coating comprises an oxide electrolyte, a fourth coating is disposed on one side that is of the positive current collector and that is away from the positive active layer, and the fourth coating comprises an oxide electrolyte; and
D50 of the oxide electrolytes in the third coating and the fourth coating is independently 0.05 µm~ 1.2 µm, and the oxide electrolytes are independently selected from Li_{1.4}Al_{0.4}Ti_{1.6}(PO₄)₃ or Li₇La₃Zr₂O₁₂.

19. The semi-solid state lithium battery according to claim 18, wherein a fifth coating is disposed between the negative current collector and the negative active layer in the negative electrode plate, the fifth coating comprises an oxide electrolyte, a sixth coating is disposed on one side that is of the negative current collector and that is away from the negative active layer, and the sixth coating comprises an oxide electrolyte; and
D50 of the oxide electrolytes in the fifth coating and the sixth coating is independently 0.05 µm~1.2 µm, and the oxide electrolytes are independently selected from Li_{1.4}Al_{0.4}Ti_{1.6}(PO₄)₃ or Li₇La₃Zr₂O₁₂.

20. The semi-solid state lithium battery according to claim 19, wherein a lowest electrolyte solution retention coefficient of the semi-solid state lithium battery is 1.25 g/Ah~1.45 g/Ah, a capacity retention rate of the semi-solid state lithium battery after high-temperature cycle 1000cls is more than 65%, an expansion rate of the semi-solid state lithium battery after high-temperature cycle 1000cls is less than 14%, a capacity retention rate of the semi-solid state lithium battery at - 20°C is more than 55%, a quantity of pulse discharge times of the semi-solid state lithium battery at -20°C is more than 45, a rate discharge capacity of the semi-solid state lithium battery at 2 C/0.2 C is more than 92%, and a temperature of a thermal shock test chamber for the semi-solid state lithium battery is more than 130°C.

21. A terminal, comprising the semi-solid state lithium battery according to any one of claims 1~20.
